# EUROPÄISCHE PATENTSCHRIFT

(11) **EP 3 532 322 B1**
(45) Veröffentlichungstag und Bekanntmachung des Hinweises auf die Patenterteilung: **16.12.2020**
(21) Anmeldenummer: 17786820.5
(22) Anmeldetag: 27.09.2017
(51) Int. Cl.: B60K 6/20, B60K 6/448, B60K 26/04, F16H 61/00, F15B 21/00

(54) **HYDRAULIKKREISLAUF FÜR EINEN HYBRIDANTRIEBSSTRANG**
HYDRAULIC CIRCUIT FOR A HYBRID DRIVETRAIN
CIRCUIT HYDRAULIQUE POUR UNE CHAÎNE CINÉMATIQUE HYBRIDE

(30) Priorität: 25.10.2016 DE 102016220964
(43) Veröffentlichungstag der Anmeldung: 04.09.2019
(73) Patentinhaber: Schaeffler Technologies AG & Co. KG, 91074 Herzogenaurach (DE)
(72) Erfinder: GRETHEL, Marco, 77830 Bühlertal (DE); WEI, Yunfan, 77815 Bühl (DE); SCHAUER, Andre, 77876 Kappelrodeck (DE)
(86) Internationale Anmeldenummer: PCT/DE2017/100824
(87) Internationale Veröffentlichungsnummer: WO 2018/077329

(56) Entgegenhaltungen:
- EP-A1- 2 607 717
- EP-A1- 2 610 526
- EP-A1- 2 982 849
- US-A1- 2005 076 958

## Beschreibung

Die Erfindung betrifft einen Hydraulikkreislauf für einen Hybridantriebsstrang zum Wechseln von Fahrbetriebszuständen eines hybrid angetriebenen Kraftfahrzeugs und ein Kraftfahrzeug mit einem Hybridantrieb, aufweisend einen Hydraulikkreislauf. Kraftfahrzeuggetriebe weisen in der Regel Kupplungen und/oder Bremsen zur Ausübung einer reibschlüssigen Verbindung mit einer Kupplungsscheibe auf. Die jeweiligen Kupplungen und/oder Bremsen des Kraftfahrzeuggetriebes werden in der Regel jeweils einzeln über vom Verbrennungsmotor zentral angeriebene hydraulische Pumpen mit Betätigungsenergie versorgt, wobei jeder Kupplung bzw. Bremse ein elektrohydraulisches Ansteuerungselement zugeordnet ist.

Eine weitere Alternative stellt die Aktivierung der Kupplungen und/oder Bremsen über jeweils einen zugeordneten Elektromotor dar. Die Kopplung zwischen Elektromotor und Kupplungen bzw. Bremsen findet entweder rein mechanisch oder kombiniert mechanisch / hydrostatisch statt. Hier ist das größte Potential zur Reduktion der Betätigungsenergie, da auf direkten Weg den Kupplungen und/oder Bremsen bedarfsorientiert Betätigungsenergie zugeführt wird. Allerdings ist der Bauraumbedarf hierbei relativ groß.

EP 2 982 849 A1 beschreibt ein Hydraulikkreislauf für einen Hybridantriebsstrang zum Wechseln von Fahrbetriebszuständen eines hybrid angetriebenen Kraftfahrzeugs mit einer einen umsteuerbaren ersten Pumpenaktuator aufweisenden ersten Fluidstromquelle, wenigstens vier fluidisch aktiv ansteuerbaren Betätigungseinrichtungen zum Wechseln der Fahrbetriebszustände. Es besteht ein regelmäßiges Bedürfnis, den Hydraulikkreislauf für einen Hybridantriebsstrang zu optimieren, um Kosten einzusparen, den Bauraum und den Energiebedarf für die Betätigung zu reduzieren.

Es ist die Aufgabe der Erfindung, einen Hydraulikkreislauf für einen Hybridantriebsstrang zum Wechseln von Fahrbetriebszuständen eines hybrid angetriebenen Kraftfahrzeugs bereitzustellen, der einen reduzierten Bauraum aufweist, wirtschaftlich herstellbar ist und einen möglichst geringen Energiebedarf für die Betätigung der Kupplungen und/oder Bremsen aufweist.

Die Lösung der Aufgabe erfolgt erfindungsgemäß durch einen Hydraulikkreislauf gemäß den Merkmalen des Anspruchs 1 und eines einen Hybridantrieb aufweisenden Kraftfahrzeug gemäß den Merkmalen des Anspruchs 10. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Hydraulikkreislauf für einen Hybridantriebsstrang zum Wechseln von Fahrbetriebszuständen eines hybrid angetriebenen Kraftfahrzeugs vorgesehen, mit einer einen umsteuerbaren ersten Pumpenaktuator aufweisenden ersten Fluidstromquelle, einer einen umsteuerbaren zweiten Pumpenaktuator aufweisenden zweiten Fluidstromquelle, wenigstens vier fluidisch aktiv ansteuerbaren Betätigungseinrichtungen zum Wechseln der Fahrbetriebszustände, wobei zwischen dem ersten Pumpenaktuator und dem zweiten Pumpenaktuator ein erstes Wechselventil angeordnet ist, und die erste Betätigungseinrichtung und die zweite Betätigungseinrichtung fluidisch mit dem ersten Wechselventil verbunden sind, so dass die erste Betätigungseinrichtung und die zweite Betätigungseinrichtung jeweils über den ersten Pumpenaktuator und/oder den zweiten Pumpenaktuator fluidisch ansteuerbar sind, wobei der ersten Betätigungseinrichtung und/oder der zweiten Betätigungseinrichtung jeweils ein Schaltventil vorgeschaltet ist, und die dritte Betätigungseinrichtung wenigstens über den ersten Pumpenaktuator und die vierte Betätigungseinrichtung wenigstens über den zweiten Pumpenaktuator ansteuerbar sind.

Unter einem hybrid angetriebenen Kraftfahrzeug wird vorzugsweise ein Kraftfahrzeug verstanden, das zum Antrieb wenigstens einen Verbrennungsmotor und wenigstens einen elektromotorischen Antrieb aufweist.

Unter einem Fahrbetriebszustand des hybrid angetriebenen Kraftfahrzeugs ist vorzugsweise ein erster Fahrbetriebszustand mit einer oder mehrerer Übersetzungsstufen eines verbrennungsmotorischen Antriebs zu verstehen. Ein zweiter Fahrbetriebszustand weist vorzugsweise eine oder mehrere Übersetzungen für einen rein elektromotorischen Antrieb des Kraftfahrzeugs auf. Vorzugsweise umfasst ein dritter Fahrbetriebszustand eine oder mehrere Verschaltungen für einen Betrieb des Kraftfahrzeugs mit einem elektronisch gesteuerten stufenlosen Getriebe, electronically controlled continuously variable transmission functions (e-CVT). Besonderes bevorzugt ist ein vierter Fahrbetriebszustand ein Standladezustand, bei dem der Verbrennungsmotor im Stand des Kraftfahrzeugs bei laufendem Verbrennungsmotor vorzugsweise einen Elektromotor zur Stromerzeugung antreibt und die erzeugte Energie in einer Speicheranordnung zum Betreiben des elektromotorischen Antriebs gespeichert wird.

Unter einer Betätigungseinrichtung ist vorzugsweise eine Kupplung und/oder eine Bremse zur Ausübung einer reibschlüssigen Verbindung mit einer um eine Antriebswelle rotierenden Reibpartner innerhalb eines Getriebes zu verstehen, wobei die jeweilige Kupplung und/oder Bremse fluidisch betätigbar und somit vorzugsweise zum Herstellen und/oder Lösen des Reibschlusses axial verlagerbar ist. Die Kupplung und/oder Bremse kann "normal offen" oder "normal geschlossen" sein. Unter "normal offen" ist zu verstehen, dass die Kupplung und/oder Bremse im Grundzustand keine reibschlüssige Verbindung aufweist. Erst durch einen auf die Kupplung und/oder Bremse aufgebrachten hydraulischen bzw. fluidischen Druck erfolgt der Reibschluss durch die Kupplung und/oder Bremse mit der jeweiligen Reibpartner. Bei einer "normal geschlossenen" Kupplung und/oder Bremse ist dies entsprechend umgekehrt. Die Kupplung kann vorzugsweise eine trockene und/oder nasse Kupplung sein, und die Bremse eine entsprechende trockene und/oder nasse Bremse. Ebenso kann die Betätigungseinrichtung eine kombinierte Kupplung/Bremse sein, die vorzugsweise eine trockene und/oder nasse Kupplung/Bremse ist. Weitere Betätigungsvorrichtungen außer Kupplungen und/oder Bremsen sind zur Realisierung der Getriebefunktionen nicht notwendig und müssen somit auch nicht aktuiert, d.h. mit hydraulischen bzw. fluidischen Druck beaufschlagt werden. Getriebe deren Betätigungseinrichtungen Kupplungen und/oder Bremsen aufweisen, werden typischerweise mit Planetenradsätzen gebildet.

Der Hydraulikkreislauf weist somit eine erste Fluidstromquelle und eine von der ersten Fluidstromquelle verschiedene zweite Fluidstromquelle auf. Die erste Fluidstromquelle weist einen ersten umsteuerbaren Pumpenaktuator auf, und die zweite Fluidstromquelle umfasst einen umsteuerbaren zweiten Pumpenaktuator. Unter einem Pumpenaktuator ist vorzugsweise eine Hydraulikpumpe zu verstehen. Umsteuerbar bedeutet, dass der Pumpenaktuator bzw. die Hydraulikpumpe in zwei Richtungen betreibbar ist. Vier Betätigungseinrichtungen zum Wechseln der Fahrbetriebszustände sind über den ersten Pumpenaktuator und/oder den zweiten Pumpenaktuator fluidisch betätigbar. Zwischen dem ersten Pumpenaktuator und dem zweiten Pumpenaktuator ist ein erstes Wechselventil angeordnet, wobei an das erste Wechselventil die erste Betätigungseinrichtung und die zweite Betätigungseinrichtung der vier Betätigungseinrichtungen fluidisch verbunden sind, so dass die erste Betätigungseinrichtung und die zweite Betätigungseinrichtung jeweils über den ersten Pumpenaktuator oder den zweiten Pumpenaktuator hydraulisch angesteuert werden können. Ein Wechselventil ist auch unter den Begriff _{"}ODER-Ventil" bekannt. Der ersten Betätigungseinrichtung und der zweiten Betätigungseinrichtung ist jeweils ein Schaltventil vorgeschaltet, über den der Zufluss zur ersten Betätigungseinrichtung bzw. zweiten Betätigungseinrichtung steuerbar ist. Die dritte Betätigungseinrichtung ist über den ersten Pumpenaktuator und die vierte Betätigungseinrichtung ist über den zweiten Pumpenaktuator fluidisch bzw. hydraulisch ansteuerbar. Auf diese Weise können in Abhängigkeit der Drehrichtung des ersten Pumpenaktuators und des zweiten Pumpenaktuators die vier Betätigungseinrichtungen zum Wechseln der Fahrbetriebszustände fluidisch angesteuert werden, wobei zum Wechseln eines Fahrbetriebszustands nicht mehr als zwei der vier Betätigungseinrichtungen über den ersten Pumpenaktuator und/oder den zweiten Pumpenaktuator angesteuert werden müssen. Somit wird ein Hydraulikkreislauf für einen Hybridantriebsstrang zum Wechseln von Fahrbetriebszuständen angegeben, wobei die Fahrbetriebszustände mit nur zwei Pumpenaktuatoren wechselbar sind, so dass Bauraum, Kosten und Energiebedarf reduziert werden können.

Eine vorteilhafte Weiterbildung der Erfindung liegt darin, dass der erste Pumpenaktuator und der zweite Pumpenaktuator jeweils einen ersten Pumpenausgang und einen zweiten Pumpenausgang aufweisen, wobei das erste Wechselventil zwischen dem erste Pumpenausgang des ersten Pumpenaktuator und dem ersten Pumpenausgang des zweiten Pumpenaktuators angeordnet ist. Die erste Betätigungseinrichtung und die zweite Betätigungseinrichtung sind über einen dritten Ausgang des ersten Wechselventils angeschlossen.

Eine bevorzugte Weiterbildung der Erfindung liegt darin, dass der erste Pumpenausgang und der zweite Pumpenausgang des ersten Pumpenaktuators über ein erstes Zweidruckventil miteinander fluidisch verbunden sind und/oder der erste Pumpenausgang und der zweite Pumpenausgang des zweiten Pumpenakturautors über ein zweites Zweidruckventil miteinander verbunden sind. In die diesem Zusammenhang sieht eine bevorzugte Weiterbildung der Erfindung vor, dass das erste Zweidruckventil und/oder das zweite Zweidruckventil jeweils einen dritten Ausgang zur Verbindung mit einem Reservoir aufweisen. Unter einem Zweidruckventil wird somit vorzugsweise ein Zweidruckventil mit zwei Eingangsanschlüssen, einem Ausgangsanschluss und einem hantelförmig ausgebildeten verlagerbaren Schaltkolben verstanden, wobei der Ausgangsanschluss zwischen den zwei Eingangsanschlüssen angeordnet ist und der Schaltkolben derart verlagerbar ist, dass ein Eingangsanschluss geöffnet und der andere geschlossen ist, wobei der Ausgangsanschluss immer geöffnet ist.

In einer vorteilhaften Weiterbildung der Erfindung ist vorgesehen, dass der erste Pumpenaktuator über einen ersten Elektromotor antreibbar und/oder der zweite Pumpenaktuator über einen zweiten Elektromotor antreibbar ist. Vorzugsweise sind der erste Elektromotor und/oder der zweite Elektromotor umsteuerbar. Auf diese Weise kann können der erste Pumpenaktuator und der zweite Pumpenaktuator durch jeweils einen Elektromotor betrieben werden, wodurch Kosten, Bauraum und Energiebedarf des Hydraulikkreislaufes reduziert werden können.

Gemäß einer bevorzugten Weiterbildung der Erfindung ist vorgesehen, dass der erste Pumpenaktuator mit einer ersten Steuereinrichtung und/oder der zweite Pumpenaktuator mit einer zweiten Steuereinrichtung kommunikationstechnisch verbunden sind. Vorzugsweise sind die erste Steuereinrichtung und die zweite Steuereinheit jeweils eine lokale Kontrolleinheit, eine local communication unit (LCU). Auf diese Weise können der erste Pumpenaktuator und/oder der zweite Pumpenaktuator bzw. der jeweilige Elektromotor des ersten Pumpenaktuators und des zweiten Pumpenaktuators in einfacher Weise angesteuert werden. Besonders bevorzugt ist vorgesehen, dass der erste Pumpenaktuator und der zweite Pumpenaktuator über nur eine Steuereinrichtung ansteuerbar sind. Auf diese Weise können Kosten, Bauraum und Energiebedarf des Hydraulikkreislaufes reduziert werden.

Eine vorteilhafte Weiterbildung der Erfindung liegt darin, dass der zweite Pumpenausgang des ersten Pumpenaktuators und der zweite Pumpenausgang des zweiten Pumpenaktuators über ein zweites Wechselventil miteinander fluidisch verbunden sind, und die dritte Betätigungseinrichtung und die vierte Betätigungseinrichtung mit dem zweiten Wechselventil fluidisch verbunden sind, so dass die dritte Betätigungseinrichtung und die vierte Betätigungseinrichtung jeweils über den ersten Pumpenaktuator und/oder den zweiten Pumpenaktuator fluidisch ansteuerbar sind, wobei der dritten Betätigungseinrichtung und/oder der vierten Betätigungseinrichtung jeweils ein Schaltventil vorgeschaltet ist. Auf diese Weise ist jede der vier Betätigungseinrichtungen über den ersten Pumpenaktuator oder den zweiten Pumpenaktuator fluidisch bzw. hydraulisch ansteuerbar, so dass die Übergänge zwischen den Wechseln der Fahrbetriebszustände durch eine erhöhte Funktionsverfügbarkeit der Betätigungseinrichtungen optimiert werden kann.

Gemäß einer vorteilhaften Weiterbildung der Erfindung ist vorgesehen, dass das der jeweiligen Betätigungseinrichtung vorgeschaltete Schaltventil ein 2/2-Wegeventil und/oder ein 3/3-Wegeventil ist. Ist das Schaltventil ein 2/2-Wegeventil, kann vorzugsweise hydraulisches Fluid der jeweiligen Betätigungseinrichtung zugeführt und somit ein hydraulischer Druck aufgebaut werden oder hydraulisches Fluid von der Betätigungseinrichtung zurück geführt und somit hydraulischer Druck abgebaut werden. Bei einem 3/3-Wegeventil besteht zudem die Möglichkeit, dass hydraulisches Fluid zum Abbau des hydraulischen Drucks unabhängig von dem ersten Pumpenaktuator und/oder dem zweiten Pumpenaktuator in ein Reservoir zurück geführt werden kann. Auf diese Weise können die Übergänge zwischen den Fahrbetriebszuständen beschleunigt werden.

Eine bevorzugte Weiterbildung der Erfindung liegt darin, dass das Schaltventil elektromechanisch steuerbar ist. Auf diese Weise ist jedes Schaltventil individuell elektromechanisch betätigbar, wodurch eine schnelle und robuste Ansteuerung der jeweiligen Betätigungseinrichtung zum Wechseln der Fahrbetriebszustände ermöglicht werden kann.

Die Erfindung betrifft zudem ein Kraftfahrzeug mit einem Hybridantrieb, aufweisend einen Hydraulikkreislauf für einen Hybridantriebsstrang zum Wechseln von Fahrbetriebszuständen eines hybrid angetriebenen Kraftfahrzeugs, umfassend einer einen umsteuerbaren ersten Pumpenaktuator aufweisenden ersten Fluidstromquelle, einer einen umsteuerbaren zweiten Pumpenaktuator aufweisenden zweiten Fluidstromquelle, wenigstens vier fluidisch aktiv ansteuerbaren Betätigungseinrichtungen zum Wechseln der Fahrbetriebszustände, wobei zwischen dem ersten Pumpenaktuator und dem zweiten Pumpenaktuator ein erstes Wechselventil angeordnet ist, und die erste Betätigungseinrichtung und die zweite Betätigungseinrichtung fluidisch mit dem ersten Wechselventil verbunden sind, so dass die erste Betätigungseinrichtung und die zweite Betätigungseinrichtung jeweils über den ersten Pumpenaktuator und/oder den zweiten Pumpenaktuator fluidisch ansteuerbar sind, wobei der ersten Betätigungseinrichtung und/oder der zweiten Betätigungseinrichtung jeweils ein Schaltventil vorgeschaltet ist, und die dritte Betätigungseinrichtung wenigstens über den ersten Pumpenaktuator und die vierte Betätigungseinrichtung wenigstens über den zweiten Pumpenaktuator ansteuerbar sind.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1 eine schematische Darstellung eines Hydraulikkreislaufs, gemäß einem bevorzugten ersten Ausführungsbeispiel der Erfindung,
Fig. 2 eine schematische Darstellung eines Hydraulikkreislaufs, gemäß einem bevorzugten zweiten Ausführungsbeispiel der Erfindung,
Fig. 3 eine schematische Darstellung des Hydraulikkreislaufs, gemäß einem bevorzugten dritten Ausführungsbeispiel der Erfindung.

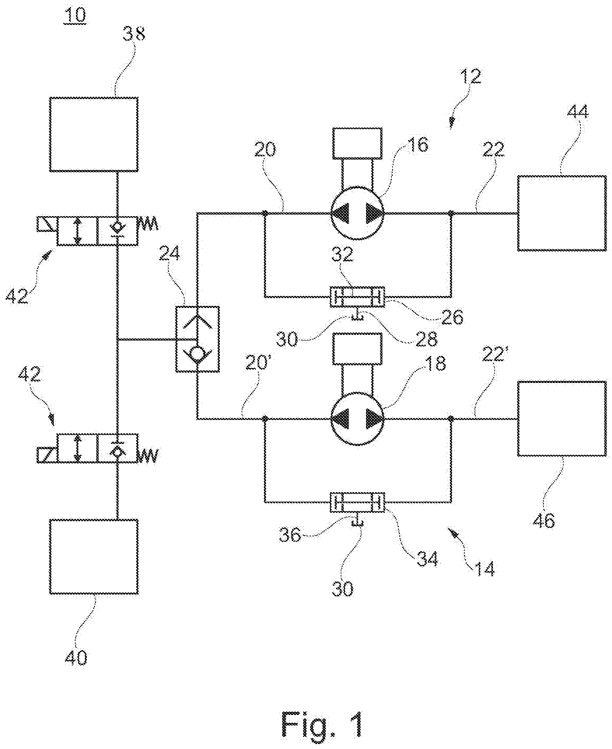

In Fig. 1 ist eine schematische Darstellung des Hydraulikkreislaufs 10 für einen Hybridantriebsstrang zum Wechseln von Fahrbetriebszuständen eines hybrid angetriebenen Kraftfahrzeugs gezeigt. Unter einem Fahrbetriebszustand des hybrid angetriebenen Kraftfahrzeugs ist vorzugsweise ein erster Fahrbetriebszustand mit einer oder mehrerer Übersetzungsstufen eines verbrennungsmotorischen Antriebs zu verstehen. Ein zweiter Fahrbetriebszustand weist vorzugsweise eine oder mehrere Übersetzungen für einen rein elektromotorischen Antrieb des Kraftfahrzeugs auf. Ein dritter Fahrbetriebszustand umfasst eine oder mehrere Verschaltungen für einen Betrieb des Kraftfahrzeugs mit einem elektronisch gesteuerten stufenlosen Getriebe, electronically controlled continuously variable transmission (e-CVT). Besonderes bevorzugt ist ein vierter Fahrbetriebszustand ein Standladezustand, bei dem der Verbrennungsmotor im Stand des Kraftfahrzeugs bei laufendem Verbrennungsmotor vorzugsweise einen Elektromotor zur Stromerzeugung antreibt und die erzeugte Energie in einer Speicheranordnung zum Betreiben des elektromotorischen Antriebs gespeichert wird.

Der Hydraulikkreislauf 10 weist eine erste Fluidstromquelle 12 und eine von der ersten Fluidstromquelle 12 verschiedene zweite Fluidstromquelle 14 auf. Die erste Fluidstromquelle 12 umfasst einen umsteuerbaren ersten Pumpenaktuator 16, und die zweite Fluidstromquelle 14 weist einen umsteuerbaren zweiten Pumpenaktuator 18 auf. Unter einem Pumpenaktuator 16, 18 ist eine Hydraulikpumpe zu verstehen. Umsteuerbar bedeutet, dass die Hydraulikpumpe in zwei Richtungen betreibbar ist.

Der erste Pumpenaktuator 16 und der zweite Pumpenaktuator 18 weisen jeweils einen ersten Pumpenausgang (20, 20') und einen zweiten Pumpenausgang (22, 22') auf, wobei zwischen dem ersten Pumpenausgang 20 des ersten Pumpenaktuators 16 und dem ersten Pumpenausgang 20' des zweiten Pumpenaktuators ein erstes Wechselventil 24 angeordnet ist.

Der erste Pumpenausgang 20 des erste Pumpenaktuators 16 und der zweite Pumpenausgang 22 des ersten Pumpenaktuators 16 sind über ein zwei Eingangsanschlüsse aufweisendes erstes Zweidruckventil 26 miteinander fluidisch verbunden, wobei das erste Zweidruckventil 26 weiter einen dritten Ausgang 28 aufweist, der mit einem ein Fluid aufweisendem Reservoir 30 verbunden ist. Unter einem Zweidruckventil 26 ist somit ein Zweidruckventil mit zwei Eingangsanschlüssen, einem Ausgangsanschluss und einem hantelförmigen verlagerbaren Schaltkolben 32 verstanden, wobei in Abhängigkeit der Lage des Schaltkolbens 32, ein Eingangsanschluss des ersten Zweidruckventils 26 geschlossen und der andere geöffnet wird. Auf diese Weise kann über den jeweilig geöffneten Eingangsanschluss hydraulisches Fluid aus dem Reservoir 30 entweder über den ersten Pumpenausgang oder den zweiten Pumpenausgang dem ersten Pumpenaktuator 16 zugeführt werden. Somit wird die erste Fluidstromquelle 12 bereitgestellt. Ein Zweidruckventil ist auch unter dem Begriff UND-Ventil bekannt.

Analog dazu sind der erste Pumpenausgang 20' des zweiten Pumpenaktuators 18 und der zweite Pumpenausgang 22' des zweiten Pumpenaktuators 18 über ein zwei Eingangsanschlüsse aufweisendes zweites Zweidruckventil 34 miteinander fluidisch verbunden, wobei das zweite Zweidruckventil 34 einen dritten Ausgang 36 aufweist, der mit dem das Fluid aufweisende Reservoir 30 verbunden ist. Somit kann über den jeweilig geöffneten Eingangsanschluss hydraulisches Fluid aus dem Reservoir 30 entweder üben den ersten Pumpenausgang 20' oder dem zweiten Pumpenausgang 22' dem zweiten Pumpenaktuator 18 zugeführt werden, wodurch die zweite Fluidstromquelle 14 bereitgestellt wird.

Eine erste Betätigungseinrichtung 38 und eine zweite Betätigungseinrichtung 40 sind über einen dritten Ausgang des ersten Wechselventils 24 fluidisch angeschlossen, so dass die erste Betätigungseinrichtung 38 und die zweite Betätigungseinrichtung 40 in Abhängigkeit der Stellung des ersten Wechselventils 24 über den ersten Pumpenaktuator 16 oder den zweiten Pumpenaktuator 18 fluidisch ansteuerbar sind. Der ersten Betätigungseinrichtung 38 und der zweiten Betätigungseinrichtung 40 sind jeweils ein Schaltventil 42 vorgeschaltet, über den der Zufluss zur ersten Betätigungseinrichtung 38 bzw. zweiten Betätigungseinrichtung 40 steuerbar ist.

Eine dritte Betätigungseinrichtung 44 ist an den zweiten Pumpenausgang 22 des ersten Pumpenaktuators 16 fluidisch angeschlossen, so dass die dritte Betätigungseinrichtung 44 nur über den ersten Pumpenaktuator 16 fluidisch ansteuerbar ist.

Eine vierte Betätigungseinrichtung 46 ist an den zweiten Pumpenausgang 22' des zweiten Pumpenaktuators 18 fluidisch angeschlossen, so dass die vierte Betätigungseinrichtung 46 nur über den zweiten Pumpenaktuator 18 fluidisch ansteuerbar ist.

Unter einer Betätigungseinrichtung 38, 40, 44, 46 wird eine Kupplung und/oder eine Bremse zur Ausübung einer reibschlüssigen Verbindung mit einer um eine Antriebswelle rotierender Reibpartner innerhalb eines Getriebes verstanden, wobei die jeweilige Kupplung und/oder Bremse fluidisch betätigbar und somit vorzugsweise axial verlagerbar ist. Die Kupplung und/oder Bremse kann "normal offen" oder "normal geschlossen" sein. Unter "normal offen" ist zu verstehen, dass die Kupplung und/oder Bremse im Grundzustand keine reibschlüssige Verbindung aufweist. Erst durch einen auf die Kupplung und/oder Bremse aufgebrachten hydraulischen bzw. fluidischen Druck erfolgt der Reibschluss durch die Kupplung und/oder Bremse mit der jeweiligen Kupplungsscheibe. Bei einer "normal geschlossenen" Kupplung und/oder Bremse ist dies entsprechend umgekehrt.

In Abhängigkeit der Drehrichtung des ersten Pumpenaktuators 16 und des zweiten Pumpenaktuators 18 können die vier Betätigungseinrichtungen 38, 40, 44, 46 zum Wechseln der Fahrbetriebszustände fluidisch angesteuert werden, wobei zum Wechseln eines Fahrbetriebszustands nicht mehr als zwei der vier Betätigungseinrichtungen 38, 40, 44, 46 über den ersten Pumpenaktuator 16 und/oder den zweiten Pumpenaktuator 18 angesteuert werden müssen. Somit wird ein Hydraulikkreislauf 10 für einen Hybridantriebsstrang zum Wechseln von Fahrbetriebszuständen angegeben, wobei die Fahrbetriebszustände mit nur zwei Pumpenaktuatoren 16, 18 wechselbar sind, so dass Bauraum, Kosten und Energiebedarf reduziert werden können.

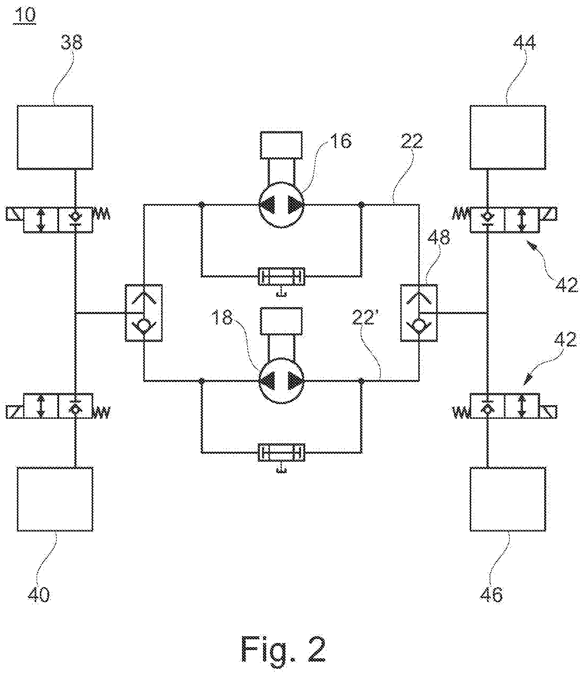

In Fig. 2 ist der aus Fig. 1 bekannte Hydraulikkreislauf 10 gezeigt, wobei der zweite Pumpenausgang 22 des ersten Pumpenaktuators 16 und der zweite Pumpenausgang 22' des zweiten Pumpenaktuators 18 über ein zweites Wechselventil 48 miteinander fluidisch verbunden sind. Die dritte Betätigungseinrichtung 44 und die vierte Betätigungseinrichtung 46 sind mit dem zweiten Wechselventil 48 fluidisch verbunden, so dass die dritte Betätigungseinrichtung 44 und die vierte Betätigungseinrichtung 46 jeweils über den ersten Pumpenaktuator 16 und/oder den zweiten Pumpenaktuator 18 fluidisch ansteuerbar sind. Der dritten Betätigungseinrichtung 44 und der vierten Betätigungseinrichtung 46 ist jeweils ein Schaltventil 42 vorgeschaltet, so dass die jeweilige Betätigungseinrichtung individuell ansteuerbar ist. Auf diese Weise ist jede der vier Betätigungseinrichtungen 38, 40, 44, 46 über den ersten Pumpenaktuator 16 oder den zweiten Pumpenaktuator 18 fluidisch bzw. hydraulisch ansteuerbar, so dass die Übergänge zwischen den Wechseln der Fahrbetriebszustände durch eine erhöhte Funktionsverfügbarkeit der Betätigungseinrichtungen 38, 40, 44, 46 optimiert werden können.

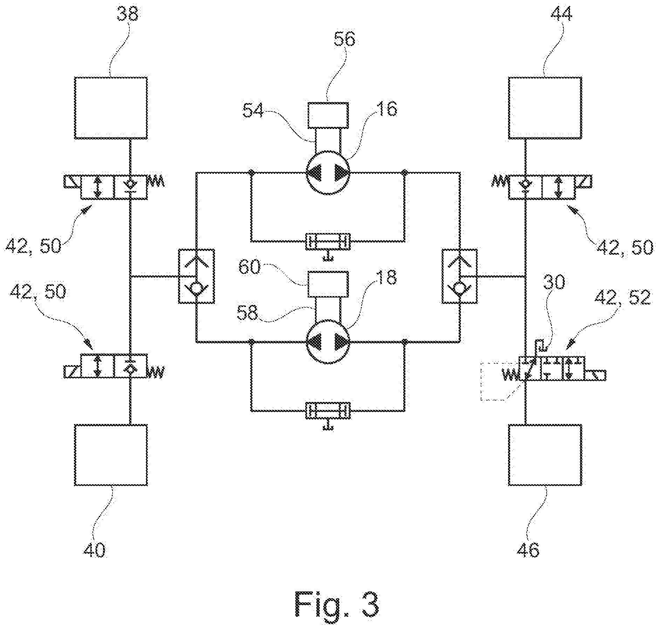

In Fig. 3 ist der aus Fig. 2 bekannte Hydraulikkreislauf 10 gezeigt, wobei der ersten Betätigungseinrichtung 38, der zweiten Betätigungseinrichtung 40 und der dritten Betätigungseinrichtung 44 jeweils ein als 2/2-Wegeventil 50 ausgebildetes Schaltventil 42 vorgeschaltet ist. Der vierten Betätigungseinrichtung 46 ist ein als 3/3-Wegeventil 52 ausgebildetes Schaltventil 42 vorgeschaltet. Im Unterschied zum 2/2-Wegeventil 50 weist das 3/3 Wegeventil 52 einen mit dem Reservoir 30 fluidisch verbundenen Ausgang auf, über den unabhängig von dem ersten Pumpenaktuator 16 und dem zweiten Pumpenaktuator 18 die vierte Betätigungseinrichtung 46 hydraulisch entlastet werden kann, wodurch die Übergänge zwischen den Wechseln der Fahrbetriebszustände beschleunigt werden können.

Der erste Pumpenaktuator 16 ist über einen umkehrbaren ersten Elektromotor 54 ansteuerbar. Auf diese Weise ist der erste Pumpenaktuator 16 in einfacher Weise in zwei Richtungen betreibbar. Der erste Elektromotor 54 und der erste Pumpenaktuator 16 sind mit einer ersten Steuereinrichtung 56 verbunden und somit komfortabel ansteuerbar. Analog dazu ist der zweite Pumpenaktuator 18 mit einem zweiten Elektromotor 58 und einer zweiten Steuereinrichtung 60 verbunden.

### Bezugszeichenliste

- 10: Hydraulikkreislauf
- 12: Erste Fluidstromquelle
- 14: Zweite Fluidstromquelle
- 16: Erster Pumpenaktuator
- 18: Zweiter Pumpenaktuator
- 20, 20': Erster Ausgang
- 22, 22': zweiter Ausgang
- 24: Erstes Wechselventil
- 26: Ersten Zweidruckventil
- 28: Dritter Ausgang (erstes Zweidruckventil)
- 30: Reservoir
- 32: Schaltkolben
- 34: Zweites Zweidruckventil
- 36: Dritter Ausgang (zweites Zweidruckventil)
- 38: Erste Betätigungseinrichtung
- 40: Zweite Betätigungseinrichtung
- 42: Schaltventil
- 44: Dritte Betätigungseinrichtung
- 46: Vierte Betätigungseinrichtung
- 48: Zweites Wechselventil
- 50: 2/2-Wegeventil
- 52: 3/3-Wegeventil
- 54: Erster Elektromotor
- 56: Erste Steuereinrichtung
- 58: Zweiter Elektromotor
- 60: Zweite Steuereinrichtung

## Patentansprüche

1. Hydraulikkreislauf (10) für einen Hybridantriebsstrang zum Wechseln von Fahrbetriebszuständen eines hybrid angetriebenen Kraftfahrzeugs mit
einer einen umsteuerbaren ersten Pumpenaktuator (16) aufweisenden ersten Fluidstromquelle 12,
einer einen umsteuerbaren zweiten Pumpenaktuator (18) aufweisenden zweiten Fluidstromquelle (14),
wenigstens vier fluidisch aktiv ansteuerbaren Betätigungseinrichtungen (38, 40, 44, 46) zum Wechseln der Fahrbetriebszustände, wobei
zwischen dem ersten Pumpenaktuator (16) und dem zweiten Pumpenaktuator (18) ein erstes Wechselventil (24) angeordnet ist, und die erste Betätigungseinrichtung (38) und die zweite Betätigungseinrichtung (40) fluidisch mit dem ersten Wechselventil verbunden sind, so dass die erste Betätigungseinrichtung (38) und die zweite Betätigungseinrichtung (40) jeweils über den ersten Pumpenaktuator und/oder den zweiten Pumpenaktuator (18) fluidisch ansteuerbar sind, wobei der ersten Betätigungseinrichtung (38) und/oder der zweiten Betätigungseinrichtung (40) jeweils ein Schaltventil (42) vorgeschaltet ist, und
die dritte Betätigungseinrichtung (44) wenigstens über den ersten Pumpenaktuator (16) und die vierte Betätigungseinrichtung (46) wenigstens über den zweiten Pumpenaktuator (18) fluidisch ansteuerbar sind.

2. Hydraulikkreislauf nach Anspruch 1, **dadurch gekennzeichnet, dass** der erste Pumpenaktuator (16) und der zweite Pumpenaktuator (18) jeweils einen ersten Pumpenausgang (20, 20') und einen zweiten Pumpenausgang (22, 22') aufweisen, wobei das erste Wechselventil (24) zwischen dem ersten Pumpenausgang (20) des ersten Pumpenaktuators (16) und dem ersten Pumpenausgang (20') des zweiten Pumpenaktuators (18) angeordnet ist.

3. Hydraulikkreislauf nach Anspruch 2, **dadurch gekennzeichnet, dass** der erste Pumpenausgang (20) und der zweite Pumpenausgang (22) des ersten Pumpenaktuators (16) über ein erstes Zweidruckventil (26) miteinander fluidisch verbunden sind, und/oder der erste Pumpenausgang (20') und der zweite Pumpenausgang (22') des zweiten Pumpenakturautors (18) über ein zweites Zweidruckventil (34) miteinander fluidisch verbunden sind.

4. Hydraulikkreislauf nach Anspruch 3, **dadurch gekennzeichnet, dass** das erste Zweidruckventil (26) und/oder das zweite Zweidruckventil (34) jeweils einen Ausgang zur Verbindung mit einem Reservoir (30) aufweisen.

5. Hydraulikkreislauf nach einem der Ansprüche 1 bis 4, **dadurch gekennzeichnet, dass** der erste Pumpenaktuator (16) über einen ersten Elektromotor (54) antreibbar und/oder der zweite Pumpenaktuator (18) über einen zweiten Elektromotor (58) antreibbar ist.

6. Hydraulikkreislauf nach einem der Ansprüche 1 bis 5, **dadurch gekennzeichnet, dass** der erste Pumpenaktuator (16) mit einer ersten Steuereinrichtung (56) und/oder der zweite Pumpenaktuator (18) mit einer zweiten Steuereinrichtung (60) kommunikationstechnisch verbunden ist.

7. Hydraulikkreislauf nach einem der Ansprüche 1 bis 6, **dadurch gekennzeichnet, dass** der zweite Pumpenausgang (22) des ersten Pumpenaktuators (16) und der zweite Pumpenausgang (22') des zweiten Pumpenaktuators (18) über ein zweites Wechselventil (48) miteinander fluidisch verbunden sind, und die dritte Betätigungseinrichtung (44) und die vierte Betätigungseinrichtung (46) mit dem zweiten Wechselventil (48) fluidisch verbunden sind, so dass die dritte Betätigungseinrichtung (44) und die vierte Betätigungseinrichtung (46) jeweils über den ersten Pumpenaktuator (16) und/oder den zweiten Pumpenaktuator (18) fluidisch ansteuerbar sind, wobei der dritten Betätigungseinrichtung (44) und/oder der vierten Betätigungseinrichtung (46) jeweils ein Schaltventil (42) vorgeschaltet sind.

8. Hydraulikkreislauf nach einem der vorhergehenden Ansprüche, **dadurch gekennzeichnet, dass** das der jeweiligen Betätigungseinrichtung (38, 40, 44, 46) vorgeschaltete Schaltventil (42) ein 2/2-Wegeventil (50) und/oder ein 3/3-Wegeventil (52) ist.

9. Hydraulikkreislauf nach einem der vorhergehenden Ansprüche, **dadurch gekennzeichnet, dass** das Schaltventil (42) elektromechanisch steuerbar ist.

10. Kraftfahrzeug mit einem Hybridantrieb, aufweisend einen Hydraulikkreislauf (10) für einen Hybridantriebsstrang zum Wechseln von Fahrbetriebszuständen nach einem der Ansprüche 1 bis 9.

## Claims

1. A hydraulic circuit (10) for a hybrid drivetrain for changing the drive operating modes of a hybrid-powered motor vehicle with a first fluid flow source 12 having a first reversible pump actuator (16),
a second fluid flow source (14) having a second reversible pump actuator (18),
at least four actuating devices (38, 40, 44, 46) which can be fluidly controlled in an active manner, for changing the drive operating modes, wherein
a first shuttle valve (24) is arranged between the first pump actuator (16) and the second pump actuator (18), and the first actuating device (38) and the second actuating device (40) are fluidly connected to the first shuttle valve, so that the first actuating device (38) and the second actuating device (40) each can be fluidly controlled via the first pump actuator and/or the second pump actuator (18), wherein the first actuating device (38) and/or the second actuating device (40) each have a switching valve (42) connected upstream, and the third actuating device (44) can be fluidly controlled at least via the first pump actuator (16) and the fourth actuating device (46) can be fluidly controlled at least via the second pump actuator (18).

2. The hydraulic circuit according to claim 1, **characterised in that** the first pump actuator (16) and the second pump actuator (18) each have a first pump outlet (20, 20') and a second pump outlet (22, 22'), wherein the first shuttle valve (24) is arranged between the first pump outlet (20) of the first pump actuator (16) and the first pump outlet (20') of the second pump actuator (18).

3. The hydraulic circuit according to claim 2, **characterised in that** the first pump outlet (20) and the second pump outlet (22) of the first pump actuator (16) are fluidly connected to one another via a first dual pressure valve (26), and/or the first pump outlet (20') and the second pump outlet (22') of the second pump actuator (18) are fluidly connected to one another via a second dual pressure valve (34).

4. The hydraulic circuit according to claim 3, **characterised in that** the first dual pressure valve (26) and/or the second dual pressure valve (34) each have an outlet for connection to a reservoir (30).

5. The hydraulic circuit according to any one of claims 1 to 4, **characterised in that** the first pump actuator (16) can be driven via a first electric motor (54) and/or the second pump actuator (18) can be driven via a second electric motor (58).

6. The hydraulic circuit according to any one of claims 1 to 5, **characterised in that** the first pump actuator (16) is connected to a first control device (56) and/or the second pump actuator (18) is connected to a second control device (60) by means of communication technology.

7. The hydraulic circuit according to any one of claims 1 to 6, **characterised in that** the second pump outlet (22) of the first pump actuator (16) and the second pump outlet (22') of the second pump actuator (18) are fluidly connected to one another via a second shuttle valve (48), and the third actuating device (44) and the fourth actuating device (46) are fluidly connected to the second shuttle valve (48), so that the third actuating device (44) and the fourth actuating device (46) each can be fluidly controlled via the first pump actuator (16) and/or the second pump actuator (18), wherein a switching valve (42) is connected upstream of the third actuating device (44) and/or the fourth actuating device (46).

8. The hydraulic circuit according to any one of the preceding claims, **characterised in that** the switching valve (42) connected upstream of the respective actuating device (38, 40, 44, 46) is a 2/2-way valve (50) and/or a 3/3-way valve (52).

9. The hydraulic circuit according to any one of the preceding claims, **characterised in that** the switching valve (42) can be controlled in an electromechanical manner.

10. A motor vehicle with a hybrid drive, having a hydraulic circuit (10) for a hybrid drivetrain for changing the drive operating modes according to any one of claims 1 to 9.

## Revendications

1. Circuit hydraulique (10) pour une chaîne cinématique hybride servant à alterner des états de marche d'un véhicule automobile à propulsion hybride comprenant une première source de courant de fluide 12 comprenant un premier actionneur de pompe (16) commutable,
une deuxième source de courant de fluide (14) ayant un deuxième actionneur de pompe (18) commutable,
au moins quatre dispositifs d'actionnement (38, 40, 44, 46) pouvant être commandés activement fluidiquement servant à alterner les états de marche,
un premier distributeur (24) étant disposé entre le premier actionneur de pompe (16) et le deuxième actionneur de pompe (18) et le premier dispositif d'actionnement (38) et le deuxième dispositif d'actionnement (40) étant reliés fluidiquement au premier distributeur, de telle sorte que le premier dispositif d'actionnement (38) et le deuxième dispositif d'actionnement (40) puissent être commandés fluidiquement respectivement par le biais du premier actionneur de pompe et/ou du deuxième actionneur de pompe (18), une soupape de commutation (42) étant respectivement branchée en amont du premier dispositif d'actionnement (38) et/ou du deuxième dispositif d'actionnement (40) et le troisième dispositif d'actionnement (44) pouvant être commandé fluidiquement au moins par le biais du premier actionneur de pompe (16) et le quatrième dispositif d'actionnement (46) au moins par le biais du deuxième actionneur de pompe (18).

2. Circuit hydraulique selon la revendication 1, **caractérisé en ce que** le premier actionneur de pompe (16) et le deuxième actionneur de pompe (18) présentent respectivement une première sortie de pompe (20, 20') et une deuxième sortie de pompe (22, 22'), le premier distributeur (24) étant disposé entre la première sortie de pompe (20) du premier actionneur de pompe (16) et la première sortie de pompe (20') du deuxième actionneur de pompe (18).

3. Circuit hydraulique selon la revendication 2, **caractérisé en ce que** la première sortie de pompe (20) et la deuxième sortie de pompe (22) du premier actionneur de pompe (16) sont reliées fluidiquement l'une à l'autre par le biais d'une première soupape à deux pressions (26) et/ou la première sortie de pompe (20') et la deuxième sortie de pompe (22') du deuxième actionneur de pompe (18) sont reliées fluidiquement l'une à l'autre par le biais d'une deuxième soupape à deux pressions (34).

4. Circuit hydraulique selon la revendication 3, **caractérisé en ce que** la première soupape à deux pressions (26) et/ou la deuxième soupape à deux pressions (34) présentent respectivement une sortie pour le raccordement à un réservoir (30).

5. Circuit hydraulique selon l'une quelconque des revendications 1 à 4, **caractérisé en ce que** le premier actionneur de pompe (16) peut être entraîné par le biais d'un premier moteur électrique (54) et/ou le deuxième actionneur de pompe (18) peut être entraîné par le biais d'un deuxième moteur électrique (58).

6. Circuit hydraulique selon l'une quelconque des revendications 1 à 5, **caractérisé en ce que** le premier actionneur de pompe (16) est relié selon une technique de communication à un premier dispositif de commande (56) et/ou le deuxième actionneur de pompe (18) est relié selon une technique de communication à un deuxième dispositif de commande (60).

7. Circuit hydraulique selon l'une quelconque des revendications 1 à 6, **caractérisé en ce que** la deuxième sortie de pompe (22) du premier actionneur de pompe (16) et la deuxième sortie de pompe (22') du deuxième actionneur de pompe (18) sont reliées fluidiquement l'une à l'autre par le biais d'un deuxième distributeur (48) et le troisième dispositif d'actionnement (44) et le quatrième dispositif d'actionnement (46) sont reliés fluidiquement au deuxième distributeur (48), de telle sorte que le troisième dispositif d'actionnement (44) et le quatrième dispositif d'actionnement (46) puissent être commandés fluidiquement respectivement par le biais du premier actionneur de pompe (16) et/ou du deuxième actionneur de pompe (18), une soupape de commutation (42) étant respectivement branchée en amont du troisième dispositif d'actionnement (44) et/ou du quatrième dispositif d'actionnement (46).

8. Circuit hydraulique selon l'une quelconque des revendications précédentes, **caractérisé en ce que** la soupape de commutation (42) branchée en amont du dispositif d'actionnement respectif (38, 40, 44, 46) est une soupape à 2/2 voies (50) et/ou une soupape à 3/3 voies (52).

9. Circuit hydraulique selon l'une quelconque des revendications précédentes, **caractérisé en ce que** la soupape de commutation (42) peut être commandée par voie électromécanique.

10. Véhicule automobile à propulsion hybride, comportant un circuit hydraulique (10) pour une chaîne cinématique hybride servant à alterner des états de marche selon l'une quelconque des revendications 1 à 9.
